# EUROPÄISCHE PATENTANMELDUNG

(11) **EP 4 614 805 A1**
(43) Veröffentlichungstag der Anmeldung: **10.09.2025**
(21) Anmeldenummer: 24161457.7
(22) Anmeldetag: 05.03.2024
(51) Int. Cl.: H02S 20/23, F24S 25/61

(54) **VORRICHTUNG ZUM BEFESTIGEN EINES MODULS, INSBESONDERE PHOTOVOLTAIK-MODUL ODER SOLAR-MODUL**

(71) Anmelder: B & K Solare Zukunft GmbH, 33332 Gütersloh (DE)
(72) Erfinder: KISIEL, Martin, 33332 Gütersloh (DE)
(74) Vertreter: Hoefer & Partner Patentanwälte mbB

(57) **Zusammenfassung**

Die Erfindung betrifft eine Vorrichtung (1) zum Befestigen eines Moduls (101), insbesondere Photovoltaik-Modul oder Solar-Modul, umfassend eine Dachpfanne (2), insbesondere aus Blech oder Kunststoff, mit einem Durchgangsloch (2.1), eine Modulhalteanordnung (5) an der das Modul (101) befestigbar ist, und eine Befestigungsanordnung (4), ausgebildet zum Einstecken in das Durchgangsloch (2.1), wobei die Befestigungsanordnung (4) am unteren Ende (4.4) zur Befestigung in einer Dachunterkonstruktion (201), insbesondere aus Beton oder Holz, ausgebildet ist und am oberen Ende (4.5) zum Befestigen der Modulhalteanordnung (5) ausgebildet ist.

## Beschreibung

Die Erfindung betrifft eine Vorrichtung zum Befestigen eines Moduls, insbesondere Photovoltaik-Modul oder Solar-Modul. Ferner umfasst die Erfindung eine Anordnung mit zumindest einer der Vorrichtungen und mit zumindest einem Modul. Darüber hinaus umfasst die Erfindung einen Dachaufbau und ein Verfahren zur Montage des Moduls.

Aus dem Stand der Technik ist es bekannt, Module auf Dächern zu montieren. Hierzu werden in der Regel Schienen verlegt, die auf dem Dach befestigt werden müssen.

Es ist Aufgabe der Erfindung eine Vorrichtung anzugeben, die eine sichere und montagefreundliche Befestigung eines Moduls auf einem Dach ermöglicht.

Die Lösung dieser Aufgabe erfolgt durch die Merkmale der unabhängigen Ansprüche. Die abhängigen Ansprüche haben bevorzugte Ausgestaltungen der Erfindung zum Gegenstand.

Somit wird die Erfindung gelöst durch eine Vorrichtung zum Befestigen eines Moduls. Bei dem Modul handelt es sich insbesondere um ein Photovoltaik-Modul oder Solar-Modul. Die Vorrichtung umfasst eine Dachpfanne. Die Dachpfanne besteht insbesondere aus Blech oder aus Kunststoff. Die Dachpfanne weist ein Durchgangsloch auf. Das Durchgangsloch ist voll umfänglich geschlossen; es handelt sich somit nicht um eine Nut oder sonstige seitliche Aussparung an der Dachpfanne. Ferner umfasst die Vorrichtung eine Modulhalteanordnung. An der Modulhalteanordnung kann das Modul befestigt werden. Die Modulhalteanordnung kann mehrere Teile umfassen, unter anderem eine Schiene, an der das Modul befestigt wird.

Ferner umfasst die Vorrichtung eine Befestigungsanordnung. Die Befestigungsanordnung ist zum Einstecken in das Durchgangsloch ausgebildet. Die Befestigungsanordnung ragt somit im montierten Zustand durch das Durchgangsloch der Dachpfanne hindurch. Die Befestigungsanordnung ist am unteren Ende zur Befestigung in einer Dachunterkonstruktion ausgebildet. Insbesondere ist das untere Ende zur Befestigung in einer Dachunterkonstruktion ausgebildet, die insbesondere aus Beton oder Holz besteht. Am oberen Ende ist die Befestigungsanordnung zum Befestigen der Modulhalteanordnung ausgebildet. Die Verwendung der Dachpfanne, insbesondere aus Blech oder Kunststoff, hat zum Vorteil, dass das Durchgangsloch in diesem Material weitaus besser gebohrt werden kann, als beispielsweise in einer Dachpfanne aus Ziegel. Ferner hat die Dachpfanne, insbesondere aus Blech oder Kunststoff, den Vorteil, dass etwaige Belastungen, die von der Befestigungsanordnung auf die Dachpfanne übertragen werden, weitaus besser aufgenommen werden können, da die Dachpfanne aus Blech oder Kunststoff, im Gegensatz zu einer Dachpfanne aus Ziegel, eine gewisse Elastizität aufweist.

Bevorzugt ist vorgesehen, dass das untere Ende der Befestigungsanordnung zum Einschrauben in die Dachunterkonstruktion ausgebildet ist. Hierzu weist das untere Ende vorzugsweise ein Betongewinde oder ein Holzgewinde auf. Alternativ zur Ausgestaltung mit einem Betongewinde kann das untere Ende auch in Form eines Schlagankers ausgebildet sein, der ebenfalls in Beton befestigbar ist.

Vorzugsweise ist das obere Ende der Befestigungsanordnung zum Anschrauben der Modulhalteanordnung ausgebildet. Hierzu weist das obere Ende vorzugsweise ein Maschinengewinde auf.

Die Befestigungsanordnung ist vorzugsweise aus Metall gefertigt. Vorzugsweise erstreckt sich die Befestigungsanordnung entlang einer Längsachse, sodass das obere Ende und das untere Ende miteinander fluchten. Wie beschrieben, weisen sowohl das obere Ende als auch das untere Ende jeweils ein Gewinde auf. Vorzugsweise erstrecken sich beide Gewinde entlang dieser gemeinsamen Längsachse.

In bevorzugter Ausgestaltung umfasst die Befestigungsanordnung folgende drei Teile: (i) ein unteres Befestigungselement, das das untere Ende der Befestigungsanordnung bildet, also vorzugsweise das Betongewinde oder Holzgewinde aufweist. Ferner weist das untere Befestigungselement einen Adapterabschnitt mit Maschinengewinde auf. Dieser Adapterabschnitt mit Maschinengewinde erstreckt sich vorzugsweise ebenfalls entlang der Längsachse. (ii) Als zweites Teil umfasst die Befestigungsanordnung ein oberes Befestigungselement. Das obere Befestigungselement bildet das obere Ende der Befestigungsanordnung, weist also vorzugsweise das Maschinengewinde zum Anschrauben der Modulhalteanordnung auf. Ferner umfasst das obere Befestigungselement vorzugsweise einen Adapterabschnitt mit Maschinengewinde. Auch dieser Adapterabschnitt erstreckt sich vorzugsweise entlang der Längsachse. (iii) Als drittes Teil umfasst die Befestigungsanordnung einen Adapter, der die beiden Befestigungselemente miteinander verbindet. Hierzu sind die beiden Adapterabschnitte der beiden Befestigungselemente mit dem Adapter verschraubbar. Vorzugsweise handelt es sich bei den Adapterabschnitten um Außengewinde, die in entsprechende Innengewinde des Adapters einschraubbar sind.

Vorzugsweise weist das untere Befestigungselement einen Schraubkopf auf, beispielsweise als Außensechskant oder Innensechskant.

Durch die mehrteilige Ausgestaltung der Befestigungsanordnung ist es möglich, zunächst das untere Befestigungselement in die Dachunterkonstruktion einzusetzen, insbesondere einzuschrauben. Daraufhin kann der Adapter aufgeschraubt werden. In den Adapter wird dann entweder vor oder nach dem Aufsetzen der Dachpfanne das obere Befestigungselement eingeschraubt.

In einer alternativen Ausgestaltung umfasst die Befestigungsanordnung eine einteilige Stockschraube, die das untere Ende und das obere Ende der Befestigungsanordnung bildet. Diese Variante ist insbesondere vorgesehen, wenn das untere Ende ein Holzgewinde aufweist.

Die Dachpfanne weist im Querschnitt vorzugsweise einen Bogen auf. Besonders bevorzugt bildet der Querschnitt der Dachpfanne lediglich einen Bogen. Die Form der Dachpfanne kann in dieser Ausgestaltung auch als halbes Rohr beschrieben werden. Beidseitig des Bogens bildet die Dachpfanne jeweils eine Aufstandsfläche. Das Durchgangsloch befindet sich vorzugsweise mittig zwischen den beiden Aufstandsflächen. Im Bereich des Durchgangslochs liegt die Dachpfanne aufgrund des Bogens und der Anordnung des Durchgangslochs somit nicht auf der Dachunterkonstruktion auf. Dadurch findet der genannte Adapter zwischen der Dachunterkonstruktion und der Dachpfanne Platz.

Die Erfindung umfasst ferner eine Anordnung. Bestandteile dieser Anordnung ist zumindest eine der vorgenannten Vorrichtungen und zumindest ein Modul. Das Modul ist zur Befestigung an der Modulhalteanordnung ausgebildet.

Die Erfindung umfasst ferner einen Dachaufbau. Bestandteile des Dachaufbaus sind eine Dachunterkonstruktion, insbesondere aus Beton oder Holz, zumindest eine der vorgenannten Vorrichtungen und zumindest ein Modul. Die Dachpfanne der Vorrichtung liegt dabei auf der Dachunterkonstruktion und/oder auf benachbarten Dachpfannen auf. Bei den benachbarten Dachpfannen handelt es sich insbesondere um Dachpfannen aus Ziegel. Die Befestigungsanordnung ragt durch das Durchgangsloch, wobei das untere Ende in der Dachunterkonstruktion befestigt, insbesondere eingeschraubt, ist. Die Modulhalteanordnung ist am oberen Ende befestigt, insbesondere angeschraubt. Die Dachpfanne befindet sich zwischen der Dachunterkonstruktion und der Modulhalteanordnung, wobei das Modul an der Modulhalteanordnung befestigt ist.

Die Erfindung zeigt ferner ein Verfahren zur Montage eines Moduls, insbesondere Photovoltaik-Modul oder Solar-Modul, unter Verwendung der vorgenannten Vorrichtung. Das Verfahren umfasst dabei folgende Schritte:
(i) Befestigen des unteren Endes der Befestigungsanordnung in der Dachunterkonstruktion, insbesondere Einschrauben der Befestigungsanordnung in die Dachunterkonstruktion, insbesondere aus Beton oder Holz,
(ii) Aufstecken der Dachpfanne, insbesondere aus Blech oder Kunststoff, auf die Befestigungsanordnung, sodass die in der Dachunterkonstruktion befestigte Befestigungsanordnung durch das Durchgangsloch ragt. Alternativ kann die Dachpfanne auch auf den Adapter aufgesetzt werden, wobei im Anschluss das obere Befestigungselement durch das Durchgangsloch durchgesteckt und in den Adapter eingeschraubt wird.
(iii) Befestigen der Modulhalteanordnung am oberen Ende der Befestigungsanordnung.
(iv) Befestigen des Moduls an der Modulhalteanordnung.

Weitere Einzelheiten, Vorteile und Merkmale der vorliegenden Erfindung ergeben sich aus nachfolgender Beschreibung eines Ausführungsbeispiels anhand der Zeichnung. Es zeigt:

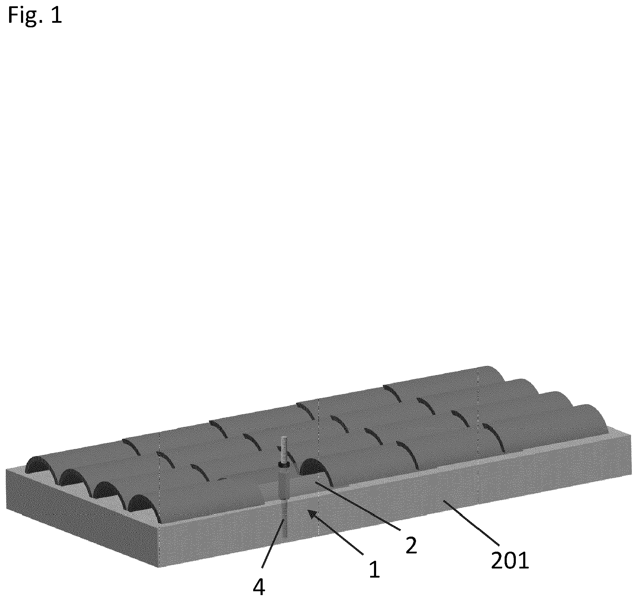

- Fig. 1: eine erfindungsgemäße Vorrichtung mit schematisch dargestellten Teilen eines Dachaufbaus gemäß einem Ausführungsbeispiel, und
- Fig. 2: die erfindungsgemäße Vorrichtung mit schematischer Ansicht des Dachaufbaus gemäß dem Ausführungsbeispiel.

Im Folgenden wird anhand der Figuren eine Vorrichtung 1 zum Befestigen eines Moduls 101 gezeigt. Die Vorrichtung ist Bestandteil der im allgemeinen Teil der Beschreibung beschriebenen Anordnung 100 sowie des Dachaufbaus 200. Soweit nicht anders erwähnt, wird im Folgenden stets auf alle Figuren Bezug genommen. Die Montage der Vorrichtung 1 erfolgt gemäß den Verfahrensschritten, wie sie im allgemeinen Teil der Beschreibung erläutert sind.

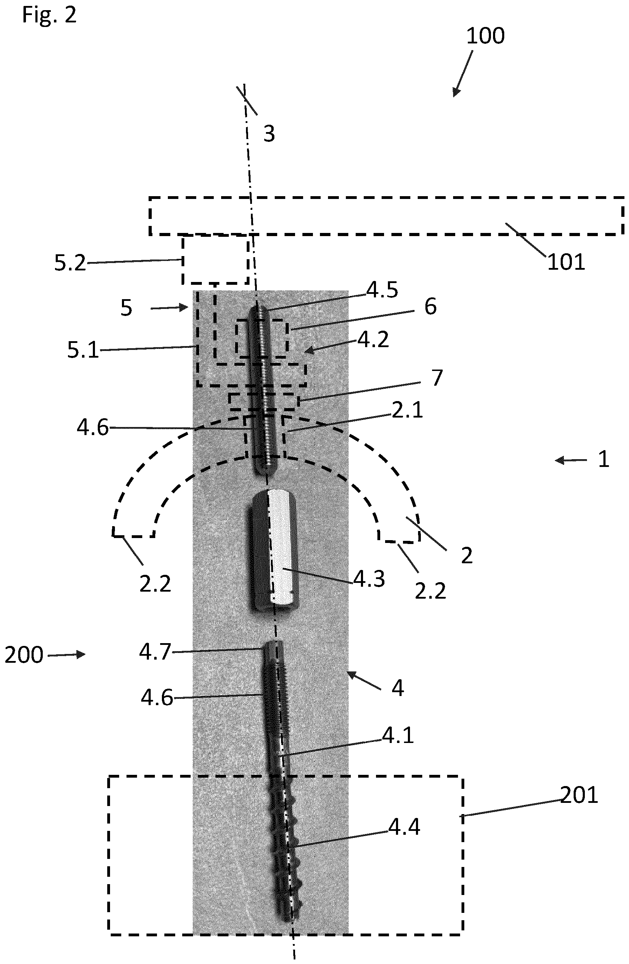

Die Figuren zeigen einen Dachaufbau 200, der eine Dachunterkonstruktion 201 aus Beton sowie mehrere Dachpfannen aus Ziegel umfasst. Ferner umfasst der Dachaufbau 200 eine Anordnung 100 mit dem Modul 101. Bestandteil der Anordnung 100 ist die Vorrichtung 1. Figur 2 zeigt hierzu mehrere Bestandteile des Dachaufbaus 200 nur in einer schematischen Darstellung.

Die Vorrichtung 1 umfasst eine Dachpfanne 2, insbesondere aus Blech oder Kunststoff. In der Dachpfanne 2 befindet sich mittig ein Durchgangsloch 2.1 zwischen zwei Aufstandsflächen 2.2. Die Dachpfanne 2 weist einen bogenförmigen Querschnitt auf. Das Durchgangsloch 2.1 erstreckt sich entlang einer Längsachse 3.

Ferner umfasst die Vorrichtung 1 eine Befestigungsanordnung 4. Im gezeigten Ausführungsbeispiel ist die Befestigungsanordnung 4 dreiteilig mit einem unteren Befestigungselement 4.1, einem oberen Befestigungselement 4.2 und einem Adapter 4.

Das untere Befestigungselement 4.1 weist ein unteres Ende 4.4 auf, das ein Betongewinde aufweist und gemäß der schematischen Darstellung in Fig. 2 in die Dachunterkonstruktion 201 eingeschraubt ist. Ferner weist das untere Befestigungselement 4.1 einen Adapterabschnitt 4.6 mit Maschinengewinde auf. Über dem Adapterabschnitt 4.6 ist ein Schraubkopf 4.7 in Form eines Außensechskants ausgebildet. Im montierten Zustand ist der Adapter 4.3 auf den Adapterabschnitt 4.6 des unteren Befestigungselements 4.1 aufgeschraubt.

Das obere Befestigungselement 4.2 weist ein oberes Ende 4.5 auf, das ein Maschinengewinde zum Aufschrauben einer Modulhalteanordnung 5 aufweist. Im unteren Bereich ist das obere Befestigungselement 4.2 als Adapterabschnitt 4.6, ebenfalls mit Maschinengewinde, ausgebildet. Im montierten Zustand ist der Adapterabschnitt 4.6 des oberen Befestigungselements 4.2 in den Adapter 4.3 eingeschraubt. Im gezeigten Ausführungsbeispiel weisen das obere Ende 4.5 und der Adapterabschnitt 4.6 des oberen Befestigungselements 4.2 ein durchgehendes Maschinengewinde auf, wobei der obere Bereich zum Aufschrauben der Modulhalteanordnung 5 und der untere Bereich zum Einschrauben in den Adapter 4.3 genutzt werden.

Die Modulhalteanordnung 5 kann, hier rein beispielhaft gezeigt, ein Zwischenstück 5.1 aufweisen, das auf das obere Ende 4.5 der Befestigungsanordnung 4 aufgesetzt wird. Beispielsweise mittels einer Mutter 6 kann das Zwischenstück 5.1 an der Befestigungsanordnung 4 befestigt werden. Zwischen dem Zwischenstück 5.1 und der Dachpfanne 2 kann eine Dichtung 7 in Form eines Rings auf die Befestigungsanordnung 4 aufgesteckt werden.

Ferner kann die Modulhalteanordnung 5 eine Schiene 5.2 umfassen, die direkt oder über weitere Elemente mit dem Zwischenstück 5.1 verbunden ist. An der Schiene 5.2 wiederum kann das Modul 101 befestigt werden.

Im gezeigten Ausführungsbeispiel erstrecken sich alle gezeigten Gewinde entlang der Längsachse 3.

Neben der vorstehenden schriftlichen Beschreibung der Erfindung wird zu deren ergänzender Offenbarung hiermit explizit auf die zeichnerische Darstellung der Erfindung in den Figuren Bezug genommen.

### Bezugszeichenliste

- 1: Vorrichtung
- 2: Dachpfanne
- 2.1: Durchgangsloch
- 2.2: Aufstandsflächen
- 3: Längsachse
- 4: Befestigungsanordnung
- 4.1: unteres Befestigungselement
- 4.2: oberes Befestigungselement
- 4.3: Adapter
- 4.4: unteres Ende
- 4.5: oberes Ende
- 4.6: Adapterabschnitt
- 4.7: Schraubkopf
- 5: Modulhalteanordnung
- 5.1: Zwischenstück
- 5.2: Schiene
- 6: Mutter
- 7: Dichtung

- 100: Anordnung
- 101: Modul
- 200: Dachaufbau
- 201: Dachunterkonstruktion

## Patentansprüche

1. Vorrichtung (1) zum Befestigen eines Moduls (101), insbesondere Photovoltaik-Modul oder Solar-Modul, umfassend:
• eine Dachpfanne (2), insbesondere aus Blech oder Kunststoff, mit einem Durchgangsloch (2.1),
• eine Modulhalteanordnung (5) an der das Modul (101) befestigbar ist,
• eine Befestigungsanordnung (4), ausgebildet zum Einstecken in das Durchgangsloch (2.1), wobei die Befestigungsanordnung (4) am unteren Ende (4.4) zur Befestigung in einer Dachunterkonstruktion (201), insbesondere aus Beton oder Holz, ausgebildet ist und am oberen Ende (4.5) zum Befestigen der Modulhalteanordnung (5) ausgebildet ist.

2. Vorrichtung (1) nach Anspruch 1, wobei das untere Ende (4.4) zum Einschrauben in die Dachunterkonstruktion (201) ausgebildet ist; insbesondere wobei das untere Ende (4.4) ein Betongewinde oder ein Holzgewinde aufweist.

3. Vorrichtung (1) nach einem der vorhergehenden Ansprüche, wobei das obere Ende (4.5) zum Anschrauben der Modulhalteanordnung (5) ausgebildet ist; insbesondere wobei das obere Ende (4.5) ein Maschinengewinde aufweist.

4. Vorrichtung (1) nach einem der vorhergehenden Ansprüche, wobei sich die Befestigungsanordnung (4) entlang einer Längsachse (3) erstreckt, sodass das obere Ende (4.5) und das untere Ende (4.4) fluchten.

5. Vorrichtung (1) nach einem der vorhergehenden Ansprüche, wobei die Befestigungsanordnung (4) folgende drei Teile umfasst:
• ein unteres Befestigungselement (4.1), das das untere Ende (4.4) der Befestigungsanordnung (4) bildet und einen Adapterabschnitt (4.6) mit Maschinengewinde aufweist,
• ein oberes Befestigungselement (4.2), das das obere Ende (4.5) der Befestigungsanordnung (4) bildet und einen Adapterabschnitt (4.6) mit Maschinengewinde aufweist,
• einen Adapter (4.3) der zur Verbindung der beiden Befestigungselemente mit beiden Adapterabschnitten (4.6) verschraubbar ist.

6. Vorrichtung (1) nach Anspruch 5, wobei das untere Befestigungselement (4.1) einen Schraubkopf (4.7), insbesondere als Außensechskant oder Innensechskant, aufweist.

7. Vorrichtung (1) nach einem der Ansprüche 1 bis 4, wobei die Befestigungsanordnung (4) eine einteilige Stockschraube umfasst, die das untere Ende (4.4) und das obere Ende (4.5) der Befestigungsanordnung (4) bildet.

8. Vorrichtung (1) nach einem der vorhergehenden Ansprüche, wobei die Dachpfanne (2) im Querschnitt einen Bogen aufweist, insbesondere lediglich einen Bogen umfasst, wobei die Dachpfanne (2) beidseitig des Bogens Aufstandsflächen (2.2) aufweist und das Durchgangsloch (2.1) mittig zwischen den beiden Aufstandsflächen (2.2) angeordnet ist.

9. Anordnung (100) umfassend zumindest eine Vorrichtung (1) nach einem der vorhergehenden Ansprüche, und zumindest ein Modul (101), insbesondere Photovoltaik-Modul oder Solar-Modul, ausgebildet zur Befestigung an der Modulhalteanordnung (5).

10. Dachaufbau (200) umfassend eine Dachunterkonstruktion (201), insbesondere aus Beton oder Holz, zumindest eine Vorrichtung (1) nach einem der vorhergehenden Vorrichtungsansprüche und zumindest ein Modul (101), insbesondere Photovoltaik-Modul oder Solar-Modul, wobei die Dachpfanne (2) auf der Dachunterkonstruktion (201) und/oder benachbarten Dachpfannen aufliegt, wobei die Befestigungsanordnung (4) durch das Durchgangsloch (2.1) ragt, wobei das untere Ende (4.4) in der Dachunterkonstruktion (201) befestigt, insbesondere eingeschraubt, ist, wobei die Modulhalteanordnung (5) am oberen Ende (4.5) befestigt, insbesondere angeschraubt, ist, wobei sich die Dachpfanne (2) zwischen Dachunterkonstruktion (201) und der Modulhalteanordnung (5) befindet, wobei das Modul (101) an der Modulhalteanordnung (5) befestigt ist.

11. Verfahren zur Montage eines Moduls (101), insbesondere Photovoltaik-Modul oder Solar-Modul, unter Verwendung einer Vorrichtung (1) nach einem der vorhergehenden Vorrichtungsansprüche, umfassend folgende Schritte:
• Befestigen des unteren Endes (4.4) der Befestigungsanordnung (4) in der Dachunterkonstruktion (201),
• Zusammenstecken der Befestigungsanordnung (4) und der Dachpfanne (2), insbesondere aus Blech oder Kunststoff, sodass die in der Dachunterkonstruktion (201) befestigte Befestigungsanordnung (4) durch das Durchgangsloch (2.1) ragt,
• Befestigen der Modulhalteanordnung (5) am oberen Ende (4.5) der Befestigungsanordnung (4),
• Befestigen des Moduls (101) an der Modulhalteanordnung (5).
